# EUROPEAN PATENT SPECIFICATION

(11) **EP 0 909 472 B1**
(45) Date of publication and mention of the grant of the patent: **17.05.2000**
(21) Application number: 97928430.4
(22) Date of filing: 18.06.1997
(51) Int. Cl.: H02B 1/20

(54) **MODULAR CABINET ARRANGEMENT FOR THE CONTROL OF ELECTRICAL USERS, PARTICULARLY MOTORS**
MODULARE SCHRANKANORDNUNG ZUR STEUERUNG ELEKTRISCHER GERÄTE, INSBESONDERE FÜR MOTOREN
AGENCEMENT DE COFFRET MODULAIRE POUR LA COMMANDE D'APPAREILS ELECTRIQUES, NOTAMMENT DE MOTEURS

(30) Priority: 28.06.1996 IT RM960455
(43) Date of publication of application: 21.04.1999
(73) Proprietor: Romolo, Guido, 00124 Roma (IT)
(72) Inventor: Romolo, Guido, 00124 Roma (IT)
(74) Representative: Cavattoni, Fabio
(86) International application number: IT9700141
(87) International publication number: WO9800896

(56) References cited:
- EP-A- 0 639 877
- EP-A- 0 642 197

## Description

The present invention relates to a modular cabinet arrangement for the control of electrical users, particularly motors.

There are known cabinet arrangements for the control of electrical users, particularly electric motors, comprising a supporting frame in which are fitted input and output power supply busbars and a multiplicity of subsidiary units of the box type containing control elements for each of the electrical users controlled from the cabinet arrangement.

Document EP-A-0 639 877 discloses such a modular cabinet.

The object of the present invention is to provide a structure of the type cited having a modular composition, with an improved arrangement of the input and output busbars, and also modular control box units which can be easily replaced and assembled.

According to the present invention, an arrangement of the type cited above is provided, comprising a column cabinet structure having a central body designed to receive a multiplicity of pull-out box units, a first rear column structure designed to receive a first multiplicity of busbars for electrical power supply to one or more of the boxes, a second rear column structure designed to receive a second multiplicity of busbars for electrical power supply to the users controlled by the boxes and a third column structure designed to house auxiliary cables, the said first and the said second multiplicity of busbars and the said auxiliary cables having points of electrical connection to the pull-out box units, these points being provided with a first and a second input and output load break switch, connected to the first multiplicity of busbars and to the second multiplicity of busbars respectively, and a connector which may be connected to a corresponding connector associated with the auxiliary cables.

The present invention will now be described with reference to one currently preferred embodiment of it, provided as an illustration and without restriction, and according to the figures of the attached drawings, in which:
Figure 1 is a schematic frontal view of the distribution and control cabinet for electrical users;
Figure 2 is a schematic side view of the cabinet shown in Figure 1;
Figure 3 is a sectional plan view of the cabinet shown in Figures 1 and 2;
Figure 4 is a partial side view in section of the power supply load break switch of the boxes of the cabinet shown in Figures 1-3;
Figure 5 is a partial side view in section of the user load break switch of the boxes of the cabinet of Figures 1-3; and
Figures 6 and 7 are a schematic front and side view respectively of the electrical distribution at the input and output of the cabinet shown in Figures 1-3.

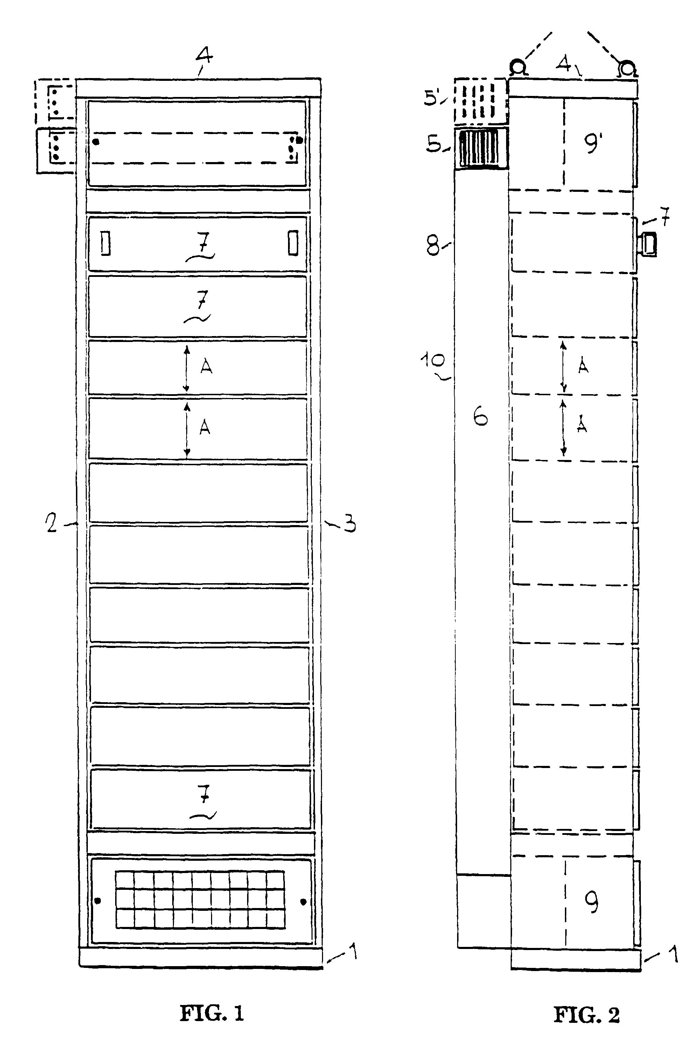

With reference to the drawings, and in particular to Figures 1 and 2, the modular cabinet arrangement according to the invention comprises a base 1 to which are fixed supporting side members 2 and 3 which are maintained in position by a top 4.

The rear portion of the distribution cabinet contains conduits 5, 5' for horizontal busbars for carrying electrical energy, a conduit 6 for vertical busbars for the supply of the boxes indicated in a general way by 7, a conduit 8 for vertical output busbars of the boxes 7 (not shown in detail in Figure 2), a box 9 in the proximity of the base 1 for the output connections from below to the individual users and a channel 10 to contain auxiliary cables (not shown in detail in Figure 2).

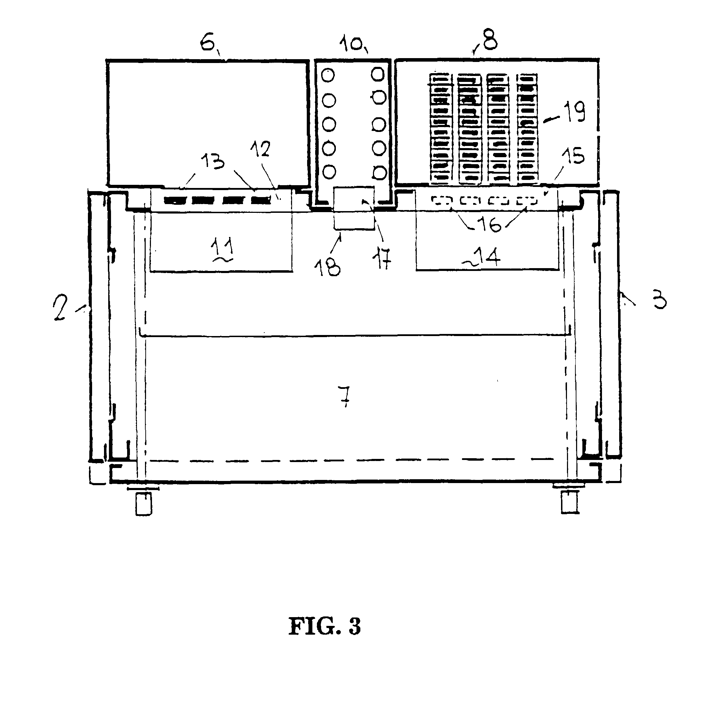

Alternatively, a box 9' may be provided in the proximity of the top 4 for the output connections from above to the individual users. Items not shown in detail in Figure 2 are clearly shown in Figure 3, together with other components which will be illustrated subsequently.

As will be seen in Figure 3, each box 7 comprises a box supply load break switch having a first part 11, which is integral with the box itself and is therefore movable when the box 7 is pulled out, and a fixed part 12 which is integral with the supply busbars 13. Similarly, the box 7 contains a user supply load break switch comprising a first part 14 which is integral with the box itself and is therefore movable when the box 7 is pulled out, and a fixed part 15 which is integral with the busbars 16 for the output to the users.

The cables passing through the channel 10 are conduits, in the number necessary for the particular design of the whole system, which lies beyond the scope of the present description, leading to a first fixed connector part 17 integral with the cabinet structure, which interacts with a second connector part 18 integral with the box 7 which is disconnected from the first part 17 if the box 7 is pulled out.

It should be noted that only a limited number of supply busbars passes through the channel 6, while a number of bars 19 commensurate with the number of power users controlled by the boxes 7 runs through the channel 8.

As may be seen, although Figures 1 and 2 show a certain number (ten) of boxes 7, this is solely by way of example.

In fact, the voids of the boxes 7 are to be considered in the same way as the standard units of "racks" whose height is measured in "units", while their length is standardized at 19 inches.

It is therefore to be expected that in the actual constructions, according to requirements, a pull-out box may have a height equal to a multiple of the dimensions "A", providing flexibility of design of the control equipment for electrical users (for example, motors) while maintaining a standardized modularity which allows major savings to be made in relation to industrial production.

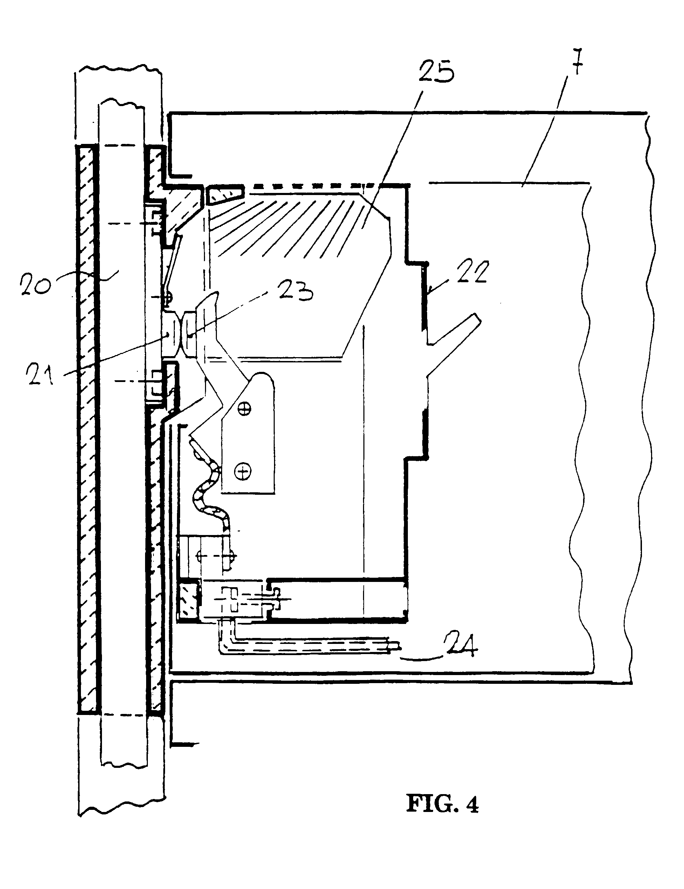

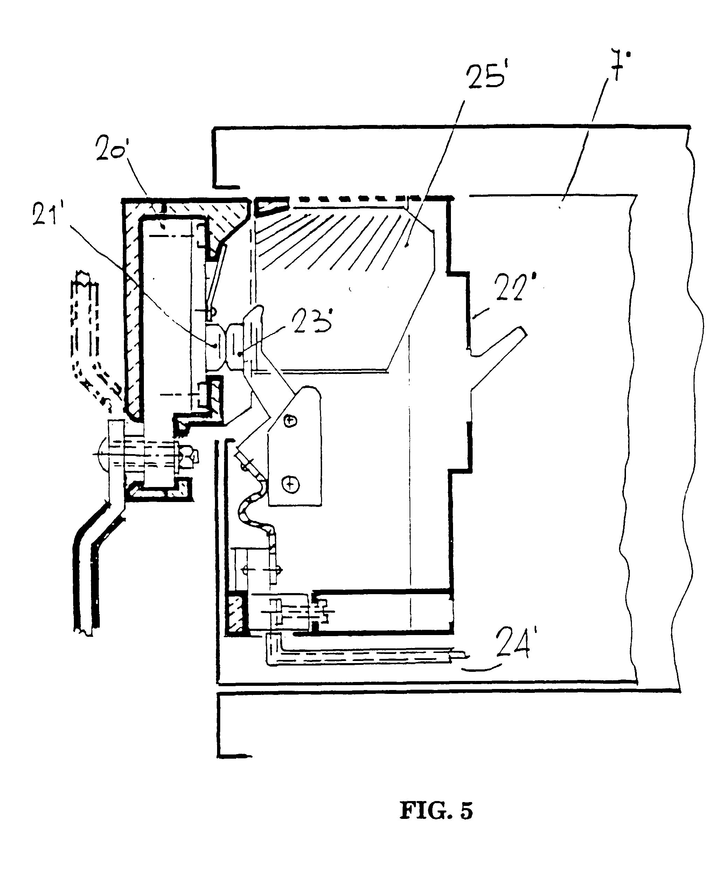

Figures 4 and 5 show partial sectional views of a generic box from the box supply side and from the user supply side respectively.

As will be seen in Figure 4, supply busbars 20 are present on the fixed part of the system and are connected mechanically and electrically to fixed contact pads 21 which interact with a load break switch 22 located inside a generic box 7. The contact pads 21 interact with movable contact pads 23 of the load break switch 22 which carry current to the cables 24 forming part of the internal circuitry of the box 7.

The contact pads 21, 23 preferably interact with a de-ionization chamber 25 whose purpose and structure are well known to those skilled in the art and will not, therefore, be illustrated in detail.

Figure 5 shows the corresponding part of the generic box 7 comprising elements which are homologous to those described with reference to Figure 4, and which are identified with the same reference numbers to which the prime mark (') has been added.

It is clear that the bars 20' form part of the output wiring leading to the electrical users controlled by the circuits inside the box 7.

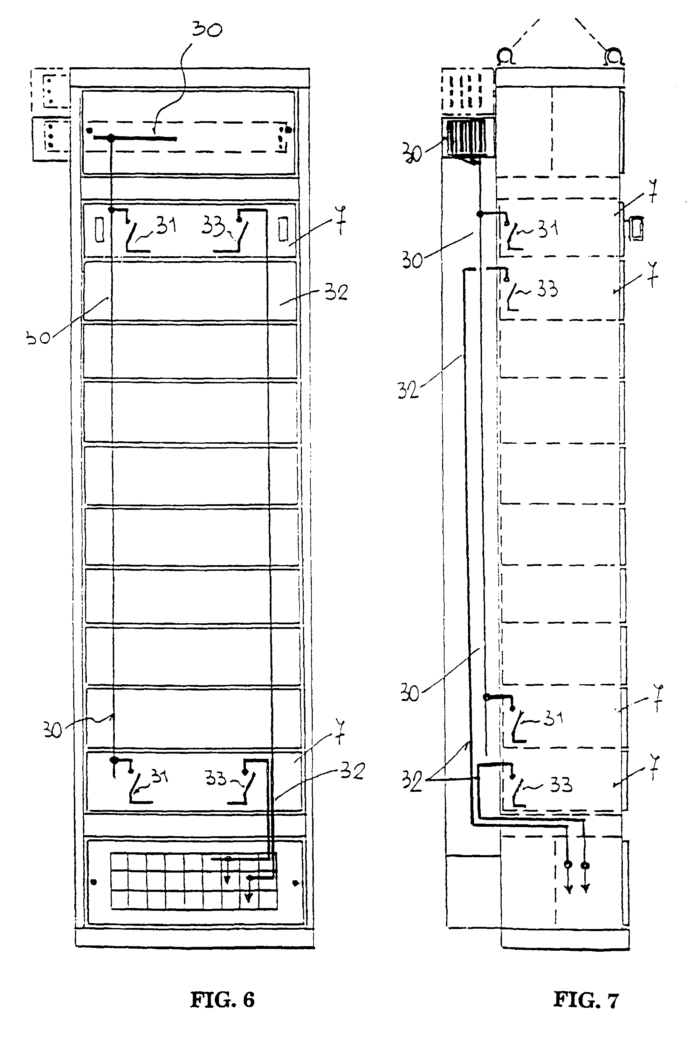

Figures 6 and 7, which are similar to Figures 1 and 2, show in a schematic and simplified way the arrangement of the bars 30 and of the load break switches 31 for the supply to the boxes 7, as well as the bars 32 and load break switches 33 for the supply to the users.

The original characteristics of the system according to the invention may be summarized as follows.
a) The parts forming the whole of a "standard vertical column" have been planned and designed in such a way that they are not included in the standard vertical column.
b) The standard vertical column has been divided into basic parts called the components of the vertical column.
c) Each component part may be constructed separately and they may also be assembled in a place other than the factory. The individual components may be inspected at the manufacturer's premises or at the production unit which manufactures the component. The whole panel may also be inspected in operation on site, in other words at the place of installation.
d) Each component is standard and always identical; the required panel may be constructed by configuring the individual parts in a convenient way, which may be different for each vertical section.

Finally, it should be noted that the components inside the boxes 7, as well as the controllers, control elements and instruments contained in a box, do not lie within the scope of the present invention, with the exception of what has been described with reference to the input and output load break switches, since these internal components are dictated by the particular operating requirements of the users.

## Claims

1. Modular cabinet arrangement for the control of electrical users, particularly motors, characterized in that it comprises a column cabinet structure having a central body designed to receive a multiplicity of pull-out box units (7), a first rear column structure (6) designed to receive a first multiplicity of busbars (20) for electrical power supply to one or more of the boxes (7), a second rear column structure (8) designed to receive a second multiplicity of busbars (20') for electrical power supply to the users controlled by the boxes (7), and a third column structure (10) designed to house auxiliary cables, the said first and the said second multiplicity of busbars (20,20') and the said auxiliary cables having points of electrical connection to the pull-out box units, these points being provided with a first and a second input and output load break switch (22,22'), connected to the first multiplicity of busbars and to the second multiplicity of busbars respectively, and a removable connector part (18) which may be connected to a corresponding fixed connector part (17) associated with the auxiliary cables.

2. Arrangement according to Claim 1, characterized in that the busbars (20) for the supply of electrical energy to the boxes are provided with fixed contact elements (21) of a first load break switch (22) having movable contact elements (23) disposed on the pull-out box (7), and in that the user supply busbars (20') are provided with fixed contact elements (21') of a second load break switch (22') having movable contact elements (23') disposed on the pull-out box (7).

3. Arrangement according to Claim 2, characterized in that each of the first and second load break switches (22,22') is provided with a de-ionization chamber (25).

4. Arrangement according to one or more of the preceding claims, characterized in that the central body is provided with a multiplicity of housings with standardized dimensions, in a number corresponding to the number of boxes (7) which can be installed.

5. Arrangement according to Claim 4, characterized in that the standardized dimensions are provided so that it is possible to house pull-out boxes (7) having dimensions which are an integral multiple of the dimensions of each elementary box.

6. Arrangement according to one or more of the preceding claims, characterized in that the pull-out boxes (7) are designed to house components and/or instruments in addition to the first and second load break switches for the input and output respectively.

## Patentansprüche

1. Modulare Schrankanordnung für die Steuerung von elektrischen Verbrauchern, insbesondere Motoren, dadurch gekennzeichnet, dass sie eine Säulenschrankkonstruktion umfasst, mit einem mittleren Körper, der zur Aufnahme einer Mehrzahl von Ausziehkasteneinheiten (7) bestimmt ist, einer ersten hinteren Säulenkonstruktion (6), die zur Aufnahme einer ersten Mehrzahl von Stromschienen (20) für die Zufuhr von elektrischem Strom zu einem oder mehreren der Kästen (7) bestimmt ist, einer zweiten hinteren Säulenkonstruktion (8), die zur Aufnahme einer zweiten Mehrzahl von Stromschienen (20') für die Zufuhr von elektrischem Strom zu den von den Kästen (7) gesteuerten Verbrauchern bestimmt ist, sowie einer dritten Säulenkonstruktion (10), die zur Unterbringung von zusätzlichen Kabeln bestimmt ist, wobei die besagte erste und die besagte zweite Mehrzahl von Stromschienen (20, 20') sowie die zusätzlichen Kabel Stellen für eine elektrische Verbindung mit den Ausziehkasteneinheiten aufweisen, wobei diese Stellen mit einem ersten und einem zweiten Eingangs- und Ausgangs-Lasttrennschalter (22, 22') versehen sind, die mit der ersten Mehrzahl von Stromschienen bzw. mit der zweiten Mehrzahl von Stromschienen verbunden sind, und mit einem beweglichen Verbinderteil (18), der mit einem entsprechenden ortsfesten Verbinderteil (17) verbunden werden kann, welcher mit den zusätzlichen Kabeln verbunden ist.

2. Anordnung nach Anspruch 1, dadurch gekennzeichnet, dass die Stromschienen (20) für die Zufuhr von elektrischer Energie zu den Kästen mit ortsfesten Kontaktelementen (21) eines ersten Lasttrennschalters (22) versehen sind, der auf dem Ausziehkasten angeordnete bewegliche Kontaktelemente (23) aufweist, und dass die Stromschienen (20') für die Zufuhr von Strom zu den Verbrauchern mit ortsfesten Kontaktelementen (21') eines zweiten Lasttrennschalters (22') versehen sind, der auf dem Ausziehkasten angeordnete bewegliche Kontaktelemente (23') aufweist.

3. Anordnung nach Anspruch 2, dadurch gekennzeichnet, dass jeder der ersten und zweiten Lasttrennschalter (22, 22') mit einer Deionisationskammer (25) versehen ist.

4. Anordnung nach einem oder mehreren der vorangehenden Ansprüche, dadurch gekennzeichnet, dass der mittlere Körper mit einer Mehrzahl von Gehäusen mit standardisierten Abmessungen versehen ist, in einer Anzahl, die der Anzahl von Kästen (7) entspricht, welche eingebaut werden können.

5. Anordnung nach Anspruch 4, dadurch gekennzeichnet, dass die standardisierten Abmessungen so vorgesehen sind, dass es möglich ist, Ausziehkästen (7) mit Abmessungen unterzubringen, die ein ganzzahliges Vielfaches der Abmessungen von jedem Elementarkasten sind.

6. Anordnung nach einem oder mehreren der vorangehenden Ansprüche, dadurch gekennzeichnet, dass die Ausziehkästen (7) dazu bestimmt sind, zusätzlich zu den ersten und zweiten Lasttrennschaltern für den Eingang bzw. Ausgang Komponenten und/oder Instrumente zu beherbergen.

## Revendications

1. Agencement d'armoire modulaire pour la commande d'appareils électriques, en particulier de moteurs, caractérisé en ce qu'il comporte une structure d'armoire en colonne ayant un corps central conçu pour recevoir une multiplicité d'unités de boîte extractibles (7), une première structure de colonne arrière (6) conçue pour recevoir une première multiplicité de barres de bus (20) pour l'alimentation en énergie électrique d'une ou plusieurs boîtes (7), une deuxième structure de colonne arrière (8) conçue pour recevoir une deuxième multiplicité de barres de bus (20') pour l'alimentation en énergie électrique des appareils commandés par les boîtes (7), et une troisième structure de colonne (10) conçue pour renfermer des câbles auxiliaires, ladite première et ladite deuxième multiplicité de barres de bus (20, 20') et lesdits câbles auxiliaires ayant des points de raccordement électrique sur les unités de boîte extractibles, ces points étant pourvus d'un premier et d'un deuxième disjoncteur de charge d'entrée et de sortie (22, 22') reliés à la première multiplicité de barres de bus et à la deuxième multiplicité de barres de bus respectivement, et une partie de connecteur mobile (18) qui peut être reliée à une partie de connecteur fixe (19) correspondante associée aux câbles auxiliaires.

2. Agencement selon la revendication 1, caractérisé en ce que les barres de bus (20) pour l'alimentation en énergie électrique vers les boîtes sont pourvues d'éléments de contact fixes (21) d'un premier disjoncteur de charge (22) ayant des éléments de contact mobiles (23) disposés sur la boîte extractible (7), et en ce que les barres de bus d'alimentation d'appareil (20') sont pourvues d'éléments de contact fixes (21') d'un deuxième disjoncteur de charge (22') ayant des éléments de contact mobiles (23') disposés sur la boîte extractible (7).

3. Agencement selon la revendication 2, caractérisé en ce que chacun des premier et deuxième disjoncteurs de charge (22, 22') est pourvu d'une chambre de désionisation (25).

4. Agencement selon une ou plusieurs des revendications précédentes, caractérisé en ce que le corps central est pourvu d'une multiplicité de logements avec des dimensions standardisées, en nombre correspondant au nombre de boîtes (7) qui doivent être installées.

5. Agencement selon la revendication 4, caractérisé en ce que les dimensions standardisées sont prévues de telle sorte qu'il est possible de loger des boîtes extractibles (7) ayant des dimensions qui sont un multiple entier des dimensions de chaque boîte élémentaire.

6. Agencement selon une ou plusieurs des revendications précédentes, caractérisé en ce que les boîtes extractibles (7) sont conçues pour loger des composants et/ou des instruments en plus des premier et deuxième disjoncteurs de charge pour l'entrée et la sortie respectivement.
